# EUROPEAN PATENT APPLICATION

(11) **EP 2 289 948 A1**
(43) Date of publication of application: **02.03.2011**
(21) Application number: 09168710.3
(22) Date of filing: 26.08.2009
(51) Int. Cl.: C08C 19/02, C08L 15/00, C08F 8/04

(54) **Nano-sized hydrogenated diene-based latex particles**

(71) Applicant: UNIVERSITY OF WATERLOO, Waterloo, Ontario N2L 3G1 (CA)
(72) Inventor: The designation of the inventor has not yet been filed
(74) Representative: Murphy, Colm Damien

(57) **Abstract**

The present invention relates to hydrogenated nano-sized diene-based latex particles, a method for their production, preferably in the absence of any organic solvents, and their use.

## Description

### FIELD OF THE INVENTION

The invention relates to nano-sized hydrogenated diene-based latex particles, a method for producing such particles, preferably in the absence of organic solvents and their use as high performance elastomers.

### BACKGROUND OF THE INVENTION

Diene-based unsaturated polymers, for example nitrile butadiene rubbers, also known as NBR, produced through polymerization of acrylonitrile and butadiene are well-known in the art. Processes for copolymerization of acrylonitrile and butadiene are described for example in US-A-3 690 349 and US-A-5 770 660. Depending on production conditions such polymers can be obtained as latex in aqueous medium. Unsaturated diene-based polymers such as NBR are used for a variety of purposes in industry, moreover processes for hydrogenating such unsaturated polymers are well-known in the art.

It has been known that carbon-carbon double bonds in diene-based polymers may be selectively hydrogenated by treating the polymer in an organic solution with hydrogen in the presence of a catalyst to produce their saturated polymers which have significantly improved end-use properties. Such processes can be selective in the double bonds which are hydrogenated so that, for example, the double bonds in aromatic or naphthenic groups are not hydrogenated and double or triple bonds between carbon and other atoms such as nitrogen or oxygen are not affected. This field of art contains many examples of catalysts suitable for such hydrogenations, including catalysts based on cobalt, nickel, rhodium, ruthenium, osmium, and iridium. The suitability of the catalyst depends on the extent of hydrogenation required, the rate of the hydrogenation reaction and the presence or absence of other groups, such as carboxyl and nitrile groups, in the polymers.

In direct latex hydrogenation, a catalyst is directly added into the latex of a diene-based polymer for the hydrogenation operation. Many diene based polymers, copolymers or terpolymers are made by emulsion polymerization processes and they are in a latex form when they are discharged from polymerization reactors. Therefore it is very desirable to directly hydrogenate a diene-based polymer in latex form which is receiving increasing attention in the recent decade. Many efforts have been made to realize such a process. US patent 7,385,010 has disclosed a process of direct hydrogenating diene-based polymer latex by using organometallic catalysts and high-pressure gaseous hydrogen.

A significant characteristic of the above processes is that they all involve catalysts in which a noble metal is involved, that they all require high-pressure hydrogen and that they may need a relatively long reaction time.

In bulk hydrogenation, a catalyst is directly mixed with a diene-based polymer or a catalyst is entrapped into the polymer, and then hydrogenation is applied. US Patent 7,345,115 teaches a process of using an organometallic catalyst and high-pressure gaseous hydrogen to hydrogenate bulk diene-based polymers at a temperature higher than 100° C, in which the polymer is directly mixed with the catalyst as particles.

To avoid using noble metals and to avoid operation under high-pressure, significant attention has been paid to the hydrogenation of C=C bonds using hydrazine or a derivative of hydrazine as a reducing agent together with an oxidant like oxygen, air or hydrogen peroxide. The hydrogen source to saturate the C=C bonds is then generated in-situ as a result of the redox reactions in which diimide is also formed as intermediate. In US-A-4,452,950 the latex hydrogenation is performed using the hydrazine hydrate/hydrogen peroxide (or oxygen) redox system to produce diimide in situ. CuSO₄ or FeSO₄ is used as a catalyst. US-A-5,039,737 and US-A-5,442,009 provide a more refined latex hydrogenation process which treats the hydrogenated latex with ozone to break the cross-linked polymer chains which form during or after the latex hydrogenation using the diimide approach. US 6,552,132 B2 discloses that a compound can be added before, during or after the latex hydrogenation to break crosslinks formed during the hydrogenation using the diimide hydrogenation route. The compound can be chosen from primary or secondary amines, hydroxylamine, imines, azines, hydrazones and oximes. US 6,635,718 B2 describes the process for hydrogenating C=C bonds of an unsaturated polymer in the form of an aqueous dispersion by using hydrazine and an oxidizing compound in the presence of a metal compound containing a metal atom in an oxidation state of at least 4 (such as Ti(IV), V(V), Mo(VI) and W(VI)) as the catalyst. In Applied Catalysis A: General 276 (2004) 123-128 and Journal of Applied Polymer Science Vol. 96, (2005) 1122-1125 detailed investigations relating to the hydrogenation of nitrile butadiene rubber latex via utilization of the diimide hydrogenation route are presented which cover examining hydrogenation efficiency and degree of hydrogenation.

It has been found that there are side reactions at the interphase of the latex particles and within the polymer phase, which generate radicals to initiate the crosslinking of polymers in the latex form. Use of radical scavengers did not show any evidence in helping to suppress the degree of gel formation. Although there are methods developed to reduce the crosslinking, the aforementioned diimide route still encounters gel formation problems, especially when high hydrogenation conversion is achieved. Therefore, the resulting hydrogenated rubber mass is difficult to process or is unsuitable for further use because of its macroscopic three dimensional cross-linked structure.

### SUMMARY OF THE INVENTION

It was an object of the present invention to provide new diene-based hydrogenated polymers. A further object of the present invention was to provide processes for producing same hydrogenated polymers.

The present invention provides new nanosized diene-based hydrogenated polymer particles in latex form wherein the particles have a particle size measured as d₉₀-value of less than 60 nm, preferably less than 40 nm, more preferably less than 30 nm and most preferably less than 20 nm. In one embodiment the diene-based unsaturated polymer is an acrylonitrile/butadiene copolymer.

Furthermore, the present invention provides a process for the selective hydrogenation of diene-based unsaturated polymer particles in latex form, comprising
a) providing diene-based unsaturated polymer particles, having a particle size measured as d₉₀-value of less than 60 nm,
b) combining the diene-based unsaturated polymer in latex form with
   (1) a hydrazine source
   (2) an oxidant and
   (3) optionally a metal ion activator and/or hydrogenation promoter and
c) maintaining a temperature of from about 20°C to about 100°C, preferably from about 30°C to about 70°C.

For the purposes of the present invention the d₉₀-diameter means that 90% of the particles have a diameter less than the value indicated.

For the purposes of the present invention selective hydrogenation preferably means hydrogenation of carbon-carbon double bonds.

### DETAILED DESCRIPTION OF THE INVENTION

Preferably, the process according to the present invention is performed as follows:

### I Preparation of diene-based unsaturated polymer particles to be hydrogenated according to the present invention:

The diene-based unsaturated polymer particles may be prepared as a latex by a method comprising
a) polymerization of at least one diene D and optionally at least one copolymerizable monomer A
b) in an aqueous medium, preferably water
c) in the presence of a surfactant, preferably alkylsulfate wherein
d) diene D and optionally at least one copolymerizable monomer A are continuously and preferably with a slow and steady feeding rate charged into a reactor containing the aqueous medium, a polymerization initiator and the surfactant.

In one preferred embodiment the diene D and optionally monomer A are added continuously and slowly. The length of the addition period depends on reaction conditions, which in principle should not allow the monomers D and A to be accumulated into droplets in the water phase and usually is at least 10 minutes. In a further preferred embodiment an amount of less than 1% (in weight, based on the amount of water), preferably less than 0.1% (in weight, based on the amount of water) of unreacted diene D and optionally monomer A in the water phase in the reactor is maintained.

In a further preferred embodiment a small amount of a redox polymerization initiator is used which is in the range of 0.05% to 5%, preferably 0.1% - 1% in weight based on the total amount of the monomers. The term "diene D and optionally at least one copolymeriz,able monomer A are continuously charged into a reactor" means that not the complete nor almost the complete amount of reactants are put together into the reactor at the very beginning of the reaction. The term includes feeding the reactants with essentially the same feeding rate and concentration including increasing and decreasing such rates. Furthermore, the term includes addition of the reactants in small portions during the reaction.

The process is useful for the production of nanosize particles according to the present invention having a d₉₀-diameter of less than 60 nm.

The diene-based latex particles are based on at least one diene monomer, preferably at least one conjugated monomer D. The diene D can be of any nature. In one embodiment (C₄-C₆) conjugated dienes are used. Preference is given to 1,3-butadiene, isoprene, 1-methylbutadiene, 2,3-dimethylbutadiene, piperylene, chloroprene, or mixtures thereof. Particular preference is given to 1,3-butadiene and isoprene or mixtures thereof. Special preference is given to 1,3-butadiene. Suitable copolymerizable monomers A include acrylonitrile, methacrylonitrile, styrene, alphamethyl styrene, propyl acrylate, butyl acrylate, propyl methacrylate, butyl methacrylate, and unsaturated carboxylic acids selected from fumaric acid, maleic acid, acrylic acid and methacrylic acid.

The conjugated diene D forms from about 15 to about 100% by weight of the carbon-carbon double bond containing polymer in the latex form. If copolymerizable monomers A are used and selected from styrene and alphamethyl styrene, the styrene and/or a methyl styrene monomer preferably forms from about 15 to about 60% by weight of the polymer. If the other copolymerizable monomers A are used and selected from acrylonitrile and methacrylonitrile, the acrylonitrile and/or methacrylonitrile monomer preferably forms from about 15 to about 50% by weight of the polymer, with the conjugated diolefin forming from about 50 to about 85% by weight of the polymer.

If other copolymerizable monomers A are used and selected from acrylonitrile and methacrylonitrile and additionally from an unsaturated carboxylic acid, the acrylonitrile or methacrylonitrile forms from about 15 to about 50% by weight of the polymer, the unsaturated carboxylic acid forms from about 1 to about 10% by weight of the polymer and the conjugated diolefin forms from about 40 to about 85% by weight of the polymer.

Preferred products include styrene-butadiene polymers of the random or block types, butadiene-acrylonitrile polymers and butadiene - acrylonitrile - methacrylic acid polymers. Preferred butadiene-acrylonitrile polymers have an acrylonitrile content of from about 25 to about 45% by weight.

A particularly suitable copolymer to be used is a nitrile rubber, this being a copolymer of an α,β-unsaturated nitrile, particularly preferred acrylonitrile, and a conjugated diene, particularly preferred 1,3-butadiene and optionally one or more further copolymerizable monomers, such as α,β-unsaturated monocarboxylic or dicarboxylic acids, their esters or amides.

As α,β-unsaturated monocarboxylic or dicarboxylic acids in such nitrile rubbers preference is given to fumaric acid, maleic acid, acrylic acid and methacrylic acid.

As esters of α,β-unsaturated carboxylic acids in such nitrile rubbers preference is given to using their alkyl esters and alkoxyalkyl esters. Particularly preferred alkyl esters of α,β-unsaturated carboxylic acids are methyl acrylate, ethyl acrylate, propyl acrylate, n-butyl acrylate, tert-butyl acrylate, propyl methacrylate, n-butyl methacrylate, tert-butyl methacrylate, 2-ethylhexyl acrylate, 2-ethylhexyl methacrylate and octyl acrylate. Particularly preferred alkoxyalkyl esters of α,β-unsaturated carboxylic acids are methoxyethyl (meth)acrylate, ethoxyethyl (meth)acrylate and methoxyethyl (meth)acrylate. It is also possible to use mixtures of alkyl esters, e.g. those mentioned above, with alkoxyalkyl esters, e.g. in the form of those mentioned above.

A preferred terpolymer is a terpolymer of acrylonitrile, 1,3-butadiene and a third monomer selected from the group consisting of fumaric acid, maleic acid, acrylic acid, methacrylic acid, n-butyl acrylate, and tert-butyl acrylate.

The synthesis of the polymer can be undertaken in latex form. The polymers to be produced are in nanoparticles in the latex.

The synthesis process can be achieved with use of a chemical redox initiator, such as ammonium persulphate (APS). Further polymerisation initiators include thermal initiators such as potassium persulfate (KPS), dialkylperoxides or azocompounds and redox initiators, for example alkylhydroperoxides such as diisopropylbenzine, p-menthane and pinane hydroperoxides, optionally in combination with chelated salts and suitable reducing agent.

The initiator can be used in small quantities. An amount of APS with respect to the total monomers is in the range of 0.0.5% to 5%, preferably 0.1%-1% in weight based on the total amount of the monomers.

The synthesis process is preferably carried out with a surfactant, such as sodium dodecyl sulfate (SDS). The amount of the surfactant can be from about 0.1% to about 15%, preferably 0.1 to 1% in weight based on the total monomer amount used.

In a preferred embodiment water is used as the medium for the monomers. The amount of water is from about 2 times to about 30 times, preferably from 5 times to 10 times, in weight based on the amount of the monomers used.

The synthesis process can be undertaken in a suitable reactor equipped with temperature regulating and monomer feeding and agitating means.

Generally, the reaction temperature suitable for the present invention is from about 0 °C to about 100 °C, preferably from about 15 °C to about 70 °C.

According to a preferred embodiment, during the course of the reaction, the reaction time is from about one quarter of an hour to about 100 hours, preferably from about 1 hour to 20 hours, depending on operational conditions.

According to a preferred embodiment, during the course of the reaction, the monomer feeding time is from about one quarter of an hour to about 50 hours, preferably from about 1 hour to 10 hours, depending on operational conditions.

According to a preferred embodiment, during the course of the reaction, after the monomer feeding is finished, an aging time is preferred and it is from about 0.25 of an hour to about 50 hours, preferably from about 1 hour to 10 hours, depending on operational conditions.

According to a preferred embodiment, when the reaction is complete, to the extent desired, the reaction vessel can be cooled (if applicable) and the polymer latex is obtained.

### II Hydrogenation:

According to the present invention, the hydrogenation of the diene-based unsaturated polymer is being achieved with the use of a hydrazine source, preferably hydrazine or hydrazine-hydrate.

In this way, hydrogen can be produced in-situ by the reaction between hydrazine and hydrogen peroxide. Thus the requirement for high-pressure gaseous hydrogen, which is always involved in the traditional process for the hydrogenation of diene-based polymers, is avoided and the use of noble metal catalyst is eliminated.

According to a preferred embodiment of the present invention, the amount of hydrazine is from about 10% to about 50% in weight based on the latex amount used.

According to a preferred embodiment of the present invention, hydrazine is added into the reactor at the beginning of the reaction.

According to a preferred embodiment of the present invention, the amount of hydrogen peroxide is from about 10% to 50% in weight based on the latex amount used. Hydrogen peroxide is added to the reactor slowly and continuously during the reaction.

According to a preferred embodiment of the present invention, a hydrogenation promoter preferably boric acid is used. The amount is generally from about 0.1 % to 10%, preferably from 0.2% to 5% in weight based on the latex used. Preferably, the promoter is added at the beginning of the reaction.

According to a preferred embodiment of the present invention, the hydrogenation is performed in the absence of organic solvents.

According to a preferred embodiment of the present invention, the reaction temperature suitable for the present invention is from about 20 °C to about 100 °C, preferably from about 30 °C to about 70 °C.

According to a preferred embodiment of the present invention, during the course of the reaction, the reaction time is controlled by the hydrogen peroxide addition time, which is from about 0.25 of an hour to about 100 hours, preferably from about 1 hour to 10 hours.

According to a preferred embodiment of the present invention, when the reaction is complete, to the extent desired, the reaction vessel can be cooled (if applicable) and the polymer latex is obtained.

In a preferred embodiment the resulting latex may be blended with additives known in the art for example an antioxidant and may be transferred to coagulation and washing vessels with sufficient agitation to prevent agglomeration. Subsequently, the product may be fed into a final dewatering device, pelletized, coated with a partitioning agent and transferred to suitable dryers.

The hydrogenation may be performed in reactors known in the art, e.g. in closed or open vessels.

Nanosized hydrogenated diene-based polymers according to the present invention can generally be used for the same technical applications as known latex particles with a higher particle size as rubber but showing improved properties, especially with respect to the resistance to degradation by heat, oxygen, and ozone.

The invention is further illustrated but is not intended to be limited by the following examples in which all parts and percentages are by weight unless otherwise specified.

### EXAMPLES

The materials which were used in the reaction and analysis are listed in Table 1.

**Table 1 - Specification of the Materials**

| **Material** | **Supplier** |
|---|---|
| Potassium persulfate (KPS, 98% purity) | Aldrich Chemical Company |
| Sodium dodecyl sulfate (SDS, 95% purity) | Sigma-Aldrich Company |
| NBR latex | Synthesized as described in the Examples |
| Acrylonitrile | Aldrich Chemical Company |
| Butadiene | LANXESS Inc. |
| Boric acid | Aldrich Chemical Company |
| Hydrazine hydrate | Aldrich Chemical Company |
| n-dodecyl mercaptan (n-DDM) | Aldrich Chemical Company |

The following Examples illustrate the scope of the invention and are not intended to limit the same.

### Example 1:

### NBR preparation:

0.0014 part ofKPS, 0.1 parts of SDS, 0.1 part of n-DDM and 20 parts of water were put into a 300 mL stainless steel high-pressure reactor (Parr Instruments) equipped with a impeller stirrer, an addition tube and a thermal couple. After the temperature was raised to 85 °C, the mixture of 1.3 parts of acrylonitrile and 3.2 parts of butadiene was added as small portions over a period of 150 min. After addition of the monomer mixture, the reaction mixture was kept at 80-85°C for an additional 20 min before cooling to halt the reaction.

### Hydrogenation operation:

25 ml of NBR latex, 0.1 g of boric acid in 5 ml, and 6 ml of hydrazine hydrate were charged into a 250 mL three necked glass flask equipped with a magnetic stirrer. The flask was immersed into a silicone oil bath. After the temperature of the reaction mixture was increased to and was stabilized at 50°C, hydrogen peroxide was added into the glass flask using a mini-pump. 10 ml of hydrogen peroxide was slowly but continuously added into the reactor and the addition time was 6.5 hr. The degree of hydrogenation was measured using a FT-IR instrument. The hydrogenated NBR latex was coagulated by ethyl alcohol to obtain the HNBR copolymer. Then the coagulant was dissolved in MEK for the analysis of hydrogenation degree. The result indicated that the hydrogenation degree was 96.1 % and no crosslinking was involved.

### Example 2:

The condition and the procedure were the same as described in example 1, except that 100 ml of NBR latex, 0.4 g of boric acid in 10 ml of water, and 24 ml of hydrazine hydrate were employed. 40 ml hydrogen peroxide was added into the reactor and the addition time was 7 hr. The result indicated that the hydrogenation degree was 97.2% and no crosslinking was involved.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. Diene-based hydrogenated polymer latex particles having a particle size measured as d₉₀-value of less than 60 nm.

2. Latex particles according to claim 1, wherein the diene-based latex particles are acrylonitrile-butadiene polymers.

3. Process for the hydrogenation of diene-based unsaturated polymer particles in latex form, comprising
a) providing diene-based unsaturated polymer particles, having a particle size measured as d₉₀-value of less than 60 nm in latex form
b) combining the diene-based unsaturated polymer in latex form with
(1) a hydrazine source
(2) an oxidant and
(3) optionally a metal ion activator and/or hydrogenation promoter and
c) maintaining a temperature of preferably from about 20°C to about 100°C.

4. Process according to claim 3, wherein the particle size of the polymer particles measured as d₉₀-value is less than 20 nm.

5. Process according to at least one of the preceding claims, wherein the hydrogenation is performed in the absence of organic solvents.

6. Process according to at least one of the preceding claims, wherein the hydrazine source is hydrazine or hydrazine-hydrate.

7. Process according to at least one of the preceding claims, wherein the oxidizing agent is H₂O₂ or a peroxide.

8. Process according to at least one of the preceding claims, wherein boric acid or a boric acid releasing compound is used as catalyst, preferably in a concentration of 0.1 to 10% by weight based on the latex used.

9. Process according to at least one of the preceding claims, wherein the hydrogenation is conducted at a temperature of between 20 to 100°C.

10. Process according to at least one of the preceding claims, wherein the unsaturated polymer is composed of a conjugated diene D, a copolymerizable monomer A containing a nitrile group and optionally further copolymerizable monomers C.

11. Process according to at least one of the preceding claims, wherein the unsaturated polymer is an acrylonitrile/butadiene copolymer.

12. Process according to at least one of the preceding claims, wherein the hydrogenation is conducted in a batch mode.

13. Process according to at least one of the preceding claims, wherein the hydrogenation is conducted in a continuous or semi-batch mode.

14. Use of hydrogenated polymers obtained according to at least one of the preceding claims as high performance elastomers.

15. Shaped articles containing diene-based hydrogenated polymers obtained according to at least one of the preceding claims.
